Europäisches Patentamt

European Patent Office

Office européen des brevets

(19)

(11) Veröffentlichungsnummer: **0 038 864**
A1

## (12) EUROPÄISCHE PATENTANMELDUNG

(21) Anmeldenummer: 80102201.3

(22) Anmeldetag: 24.04.80

(51) Int. Cl.³: **F 25 D 11/00**
F 25 B 27/00, A 45 C 11/20
//A47J41/00

(43) Veröffentlichungstag der Anmeldung:
04.11.81 Patentblatt 81/44

(84) Benannte Vertragsstaaten:
AT BE CH FR GB IT LI LU NL SE

(71) Anmelder: Eberlein & Co.
Dreichlinger Strasse 10
D-8430 Neumarkt(DE)

(72) Erfinder: Lieb, Willi
Bahnhofstrasse 20
D-8431 Mülhausen/Sulz(DE)

(74) Vertreter: Czowalla, Ernst et al,
Patentanwälte E. Czowalla P. Matschkur Königstrasse 1
D-8500 Nürnberg(DE)

(54) Kühlbox.

(57) Kühlbox mit thermisch isolierten Wänden und im Innenraum angeordneten Kühlorganen, bei der wenigstens eine der Außenflächen, insbesondere der Deckel (1), mit Solarzellen (2) zum Betrieb eines elektrischen Kühlaggregates versehen ist.

FIG.1

EP 0 038 864 A1

**Dr. Max Schneider** † (1977)
**Dr. Alfred Eitel** Dipl.-Ing.
**Ernst Czowalla** Dipl.-Ing. Dipl.-Ldw.
**Peter Matschkur** Dipl.-Phys.

**Patentanwälte**

zgelassen beim Europäischen Patentamt - admitted to the European Patent Office - agréés près l'Office européen des brevets

0038864

85 Nürnberg 106, den 2 April 1980
Königstraße 1 (Museumsbrücke)
Fernsprech-Sammel-Nr. 20 39 31

Parkhaus Katharinenhof
Parkhaus Adlerstraße

diess.Nr. 30 236/29-or

Eberlein & Co., Dreichlinger Straße 10, 8430 Neumarkt

Kühlbox

Die Erfindung bezieht sich auf eine Kühlbox mit thermisch isolierten Wänden und im Innenraum angeordneten Kühlorganen.

Übliche Kühlboxen, die man insbesondere zum Camping oder Picknick benutzt, weisen rundum durch relative dicke Platten von Styropor oder ähnlichen thermisch isolierenden aufgeschäumten Kunststoffen isolierte Wände auf. Zur Kühlung sind üblicherweise Kühlbeutel mit einer Kältemischung vorgesehen, die im Gefrierschrank oder Gefrierfach eines Kühlschranks vorgekühlt werden und dann entweder auf die im Inneren gestapelten Waren aufgelegt oder aber in eine Führungshalterung zwischen zwei Abteilen der Kühlbox eingeschoben werden. Derartige Kühlelemente ermöglichen jedoch nur eine begrenzte Kühlung für einige Stunden, insbesondere wenn die Kühlbox - was ja zum Entnehmen der Ess- und Trinkwaren notwendig ist - häufiger geöffnet wird.

Zur Vermeidung dieser Schwierigkeiten ist erfindungsgemäß vorgesehen, daß wenigsten eine der Außenflächen, insbesondere der Deckel der Kühlbox, mit Solarzellen zum Betrieb eines elektrischen Kühlaggregats versehen ist.

Deutsche Bank A. G. Nürnberg Nr. 330 688, BLZ 760 700 12 - Hypobank Nürnberg Nr. 1 560 274 501, BLZ 760 202 14
Postscheck-Konto: Amt Nürnberg Nr. 383 05-855 - Drahtanschrift: Norispatent

Das Vorsehen eines elektrischen Kühlaggregats bietet ersichtlich die besten Möglichkeiten einer Langzeitkühlung des Innenraums der Kühlbox, doch ergeben sich bei transportablen Kühlboxen Schwierigkeiten mit deren Stromversorgung, da ein entsprechend großer wiederaufladbarer Akku, der einen Betrieb über einen oder mehrere Tage gewährleisten könnte, viel zu groß und schwer wäre. Durch das Vorsehen von Solarzellen, die sowohl hinsichtlich des Platzbedarfs, als auch der Kosten heutzutage außerordentlich günstig im Handel erhältlich sind, vermeidet man diese Schwierigkeiten in außerordentlich einfacher Weise. Hinzukommt noch, daß derartige Solarzellen gerade im Sommer bei starker Sonneneinstrahlung die maximale Leistung bringen, wenn auch das Kühlaggregat infolge der starken Außentemperaturen am meisten belastet ist.

Allenfalls zur Überbrückung des Ausfalls der Stromversorgung bei bedecktem Himmel kann zusätzlich eine Reserve-Batterie vorgesehen sein, die über eine elektrische Schaltung beim Unterbrechen einer anderen Stromversorgung automatisch an das Kühlaggregat angeschlossen wird. Diese Reserve-Batterie wird man bevorzugt wiederum als wiederaufladbaren Trockenakku ausbilden, wobei jedoch die Größe dieses wiederaufladbaren Trockenakkus wegen seiner bloßen Lückenbüßer-Funktion so klein gehalten werden kann, daß sie nicht stört.

Mit besonderem Vorteil soll das Kühlaggregat derart in eine Seitenwand, insbesondere den Deckel eingebaut sein, daß die Wärmeabführglieder etwa in deren Außenfläche liegen.

Besonders einfach läßt sich das Problem der Wärmeabfuhr dadurch lösen, daß dieAußenfläche der den Kühlaggregat benachbarten Seitenwand, insbesondere der die Solarzellen tragenden Seitenwand, unter Freilegung der Wärmeabführglieder des Kühlaggregats selbständig feststellbar verschwenkbar ausgebildet ist. Dadurch ergibt sich zusätzlich auch der Vorteil, daß die Solarzellen in die jeweils günstigste Stellung gegenüber der Sonneneinstrahlung gebracht werden können, ohne daß die Kühlbox zu diesem Zweck in umständlicher Weise in einer verkippten Lage aufgestellt werden müßte, wodurch nicht dicht schließende Gefäße im Inneren auslaufen könnten.

Schließlich liegt es auch noch im Rahmen der Erfindung, einen Stromanschluß zum Anschließen des Kühlaggregats an ein äußeres Stromnetz, insbesondere die Autobatterie vorzusehen, um entweder zu Hause vor der Mitnahme der Kühlbox oder aber während der Fahrt im Auto das Kühlaggregat über eine derartige externe Stromquelle zu betreiben.

Mit besonderem Vorteil läßt sich dieser äußere Stromanschluß in der Weise realisieren, daß ein Stromanschlußkabel mit einem an die Buchse des Zigarettenanzünders angepaßten Steckers vorgesehen ist, so daß - infolge der Normung der Zigarettenanzünder in Kraftfahrzeugen - die erfindungsgemäßte Kühlbox in jedem Kraftfahrzeug durch Einstecken in die Zigarettenzünderbuchse extern mit Strom zur Kühlung versorgt werden kann.

Weitere Vorteile, Merkmale und Einzelheiten der Erfindung ergeben sich aus der nachfolgenden Beschreibung eines Ausgangsbeispiels sowie anhand der Zeichnung. Dabei zeigen:

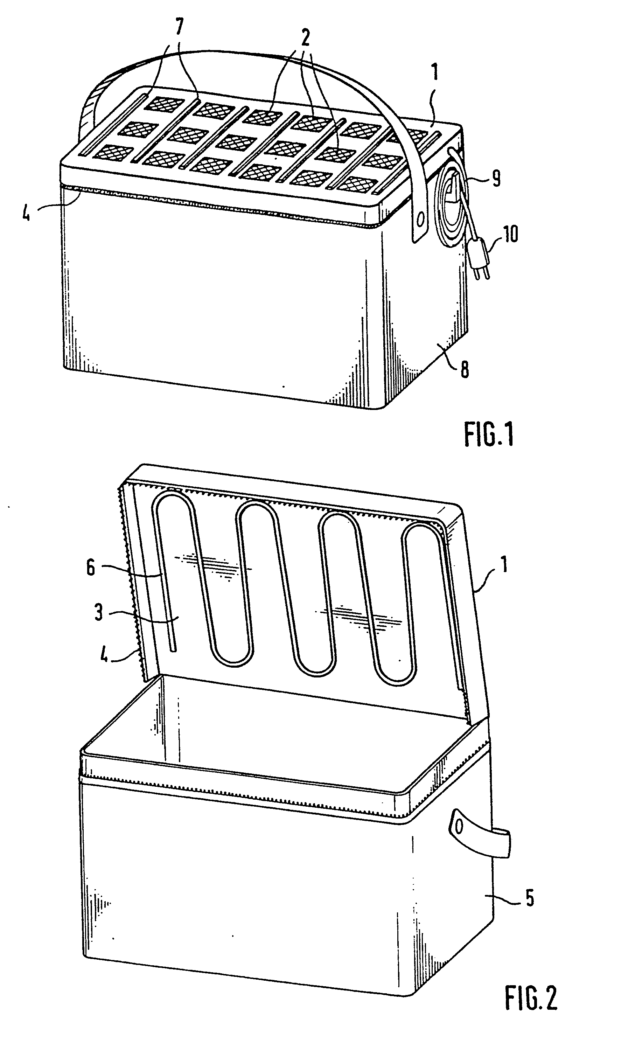

Fig. 1 eine erfindungsgemäße Kühlbox mit in den Deckel eingebauten Solarzellen und
Fig. 2 eine Ansicht der Kühlbox nach Fig. 1 bei geöffnetem Deckel.

- 4 -

Die dargestellte Kühlbox weist in üblicher Weise durch Styropor o.dgl. Isoliermaterialien thermisch isolierte Seitenwände auf, wobei der Begriff Seitenwände selbstverständlich auch die Boden- und Deckelwand mit umfassen soll. In die Außenfläche des Deckels 1 sind Solarzellen 2 eingebaut, die zur Stromversorgung eines elektrischen Kühlaggregats 3 vorgesehen sind, welches auf der Innenseite des Deckels 1, der in üblicher Weise über einen Reißverschluß 4 o.dgl. mit dem Korpus 5 verbunden werden kann, angeordnet ist. Von diesem elektrischen Kühlaggregat ist in der schematischen Zeichnung lediglich die Kühlschlange 6 zu sehen. Selbstverständlich könnte das Kühlaggregat auch an der Innenseite jeder anderen Seitenfläche angeordnet sein, doch hat die Anordnung an der Innenseite des Deckels den Vorteil, daß die Kühlung optimal oberhalb des zu kühlenden Innenraums angeordnet ist. Die schwerere kalte Luft streicht an den zu kühlenden Gegenständen vorbei, wenn sie nach unten absinkt und sie hat damit eine gleichmäßige Kühlung aller Bereiche des Innenraums zur Folge.

Bei 7 sind schematisch Wärmeabführungsglieder angedeutet, die zwischen den Solarzellen 2 angeordnet sind und der Abgabe der Kühlwärme nach außen an die Umgebungsluft dienen.

An der einen Seitenwand 8 ist ein Stromanschlußkabel 9 mit einem in die Zigarettenanzünderbuchse einsteckbaren Stecker 10 gehaltert, so daß während der Autofahrt die Kühlbox über das Bordstromnetz betrieben werden kann.

Die Erfindung ist nicht auf das dargestellte Ausführungsbeispiel beschränkt. So wäre es beispielsweise auch möglich, die die Solarzellen 2 tragende Außenfläche der Seitenwand,

- 5 -

im vorliegenden Fall also des Deckels 1, selbständig feststellbar verschwenkbar auszubilden, so daß sie zum einen
optimal bezüglich der Sonne positioniert werden kann und
zum anderen die darunter liegenden Wärmeabführungsglieder
des elektrischen Kühlaggregats freilegt.

- 1 -

Patentansprüche:

1. Kühlbox mit thermisch isolierten Wänden und im Innenraum angeordneten Kühlorganen, dadurch gekennzeichnet, daß wenigstens eine der Außenflächen, insbesondere der Deckel, mit Solarzellen zum Betrieb eines elektrischen Kühlaggregats versehen ist.

2. Kühlbox nach Anspruch 1, dadurch gekennzeichnet, daß das Kühlaggregat derart in einer Seitenwand, insbesondere den Deckel, eingebaut ist, daß die Wärmeabführungsglieder etwa in deren Außenfläche liegen.

3. Kühlbox nach Anspruch 2, dadurch gekennzeichnet, daß die Außenfläche der dem Kühlaggregat benachbarten Seitenwand, insbesondere der die Solarzellen tragenden Seitenwand, unter Freilegung der Wärmeabführglieder des Kühlaggregates selbständig feststellbar verschwenkbar ausgebildet ist.

4. Kühlbox nach insbesondere einem der Ansprüche 1 bis 3, gekennzeichnet durch einen Stromanschluß zum Anschließen des Kühlaggregates an ein äußeres Stromnetz, insbesondere die Autobatterie.

5. Kühlbox nach Anspruch 4, gekennzeichnet durch ein Stromanschlußkabel mit einem an die Buchse des Zigarettenanzünders angepaßten Stecker.

6. Kühlbox nach einem der Ansprüche 1 bis 5, gekennzeichnet durch einen eingebauten, vorzugsweise als wiederaufladbarer Trockenakku ausgebildeten, Reservebatterie, die bei über eine elektrische Schaltung beim Unterbrechen einer anderen Stromversorgung angeschlossen wird.

0038864

FIG.1

FIG.2

0038864

# EUROPÄISCHER RECHERCHENBERICHT

Nummer der Anmeldung

EP 80 10 2201

| EINSCHLÄGIGE DOKUMENTE | | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| X | DE - A - 2 739 514 (HESS) <br> * Seite 12, Absatz 2 - Seite 14, Absatz 1; Figur 4 * <br> -- | 1,2,3 | F 25 D 11/00 <br> F 25 B 27/00 <br> A 45 C 11/20// <br> A 47 J 41/00 |
| | DE - A - 2 616 600 (BERLINER MASCHINENBAU) <br> * Ganzes Dokument * <br> -- | 1 | |
| | FR - A - 1 299 903 (INDES) <br> * Seite 1, rechte Spalte, Absatz 1 - Seite 2, rechte Spalte, Absatz 4; Figuren 1-4* <br> -- | 2,4 | RECHERCHIERTE SACHGEBIETE (Int. Cl.³) |
| | DE - A - 2 327 354 (SCHIRP) <br> * Ganzes Dokument * <br> -- | 4,6 | F 25 B <br> F 25 D <br> A 45 C <br> A 47 G <br> A 47 J <br> B 65 D |
| | DE - A - 1 908 713 (LINDE) <br> * Seite 2, letzter Absatz - Seite 4, Absatz 4; Figuren 1 und 2 * <br> -- | 4,6 | |
| | DE - A - 2 732 321 (BIPOL) <br> * Seite 13, Absatz 4; Figur 1 * <br> -- | 5 | KATEGORIE DER GENANNTEN DOKUMENTE |
| A | DE - A - 2 438 645 (SCHIRP) | | X: von besonderer Bedeutung |
| A | DE - A - 2 347 457 (JUSTI) | | A: technologischer Hintergrund <br> O: nichtschriftliche Offenbarung |
| A | FR - A - 2 435 680 (DAVID) | | P: Zwischenliteratur <br> T: der Erfindung zugrunde liegende Theorien oder Grundsätze |
| | ./. | | E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt

| Recherchenort | Abschlußdatum der Recherche | Prüfer |
|---|---|---|
| Den Haag | 19-12-1980 | BOETS |

EPA form 1503.1  06.78

Europäisches
Patentamt

**EUROPÄISCHER RECHERCHENBERICHT**

| | EINSCHLÄGIGE DOKUMENTE | | KLASSIFIKATION DER ANMELDUNG (Int Cl.) |
|---|---|---|---|
| Kategorie | Kennzeichnung des Dokuments mit Angabe, soweit erforderlich, der Maßgeblichen Teile | betrifft Anspruch | |
| A | US - A - 2 532 234 (KIMBLE) | | |
| A | US - A - 2 281 404 (WURSTER) | | |
| | ---- | | |
| | | | RECHERCHIERTE SACHGEBIETE (Int. Cl.³) |